# EUROPEAN PATENT SPECIFICATION

(11) **EP 2 375 627 B1**
(45) Date of publication and mention of the grant of the patent: **02.03.2016**
(21) Application number: 09831463.6
(22) Date of filing: 08.12.2009
(51) Int. Cl.: H04L 9/08, H04L 9/32, H04W 12/04, H04W 12/06, H04W 12/10

(54) **THREE-WAY HANDSHAKE PROTOCOL METHOD**
DREIWEGE-HANDSHAKE-PROTOKOLLVERFAHREN
PROCÉDÉ POUR UN PROTOCOLE D ÉTABLISSEMENT D UNE CONNEXION EN TROIS ÉTAPES

(30) Priority: 09.12.2008 CN 200810184137
(43) Date of publication of application: 12.10.2011
(73) Proprietor: China Iwncomm Co., Ltd, Shaanxi 710075 (CN)
(72) Inventor: TIE, Manxia, Shaanxi 710075 (CN); CAO, Jun, Shaanxi 710075 (CN); HU, Yanan, Shaanxi 710075 (CN); XIAO, Yuelei, Shaanxi 710075 (CN); HUANG, Zhenhai, Shaanxi 710075 (CN)
(74) Representative: Hall, Graeme Keith
(86) International application number: PCT/CN2009/075381
(87) International publication number: WO 2010/066186

(56) References cited:
- WO-A1-2008/125731
- WO-A2-2008/112455
- CN-A- 1 905 436
- CN-A- 101 431 519
- JING LIU ET AL: "Security Verification of 802.11i 4-Way Handshake Protocol", IEEE INTERNATIONAL CONFERENCE ON COMMUNICATIONS, 2008 : ICC '08 ; 19 - 23 MAY 2008, BEIJING, CHINA, IEEE, PISCATAWAY, NJ, USA, 19 May 2008 (2008-05-19), pages 1642-1647, XP031265638, ISBN: 978-1-4244-2075-9
- ANONYMOUS ED - ANONYMOUS: "International Standard - Information technology Telecommunications and information exchange between systems Local and metropolitan area networks Specific requirements Part 11: Wireless LAN Medium Access Control (MAC) and Physical Layer (PHY) specifications AMENDMENT 6: Medium Access Control (MAC) Se", 23 July 2004 (2004-07-23), IEEE STANDARD; [IEEE STANDARD], IEEE, PISCATAWAY, NJ, USA, PAGE(S) C1 - 178, XP017601578, ISBN: 978-0-7381-4073-5 * the whole document *
- 'High Rate Ultra Wideband PHY and MAC Standard, 1st edition' STANDARD ECMA-368 December 2005, pages 226 - 228

## Description

This application claims priority to Chinese Patent Application No. 200810184137.1, filed with the State Intellectual Property Office of the People's Republic of China on December 9,2008 and entitled "Three-way handshake protocol method".

### Field of the Invention

The present invention relates to the field of network security and particularly to a three-way handshake protocol method.

### Background of the Invention

The European Computer Manufacturers Association (ECMA) proposed the Ultra Wideband (UWB) specification at the physical layer and the Media Access Control (MAC) layer as defined in the standard of ECMA368 in 2005. Ultra Wideband (UWB) refers to carrier-free communication where data is transmitted in a sine wave narrow pulse on the order of nanoseconds to picoseconds. A four-way handshake protocol is designed in the standard of ECMA368 to create or update a Pairwise Temporal Key (PTK) between Ultra Wideband (UWB) devices. The four-way handshake protocol is as follows.

1) An initiator transmits a message 1: MN∥SC∥PTKID|MKID∥I-Nonce∥PTK-MIC to a responder, where the Message Number (MN) is 1, the Status Code (SC) is 0, which indicates a normal protocol, the Pairwise Temporal Key Identifier (PTKID) represents a value selected randomly by the initiator (different from a Temporal Key Identifier (TKID) locally stored or used in an ongoing four-way handshake protocol or Group Temporal Key (GTK) distribution protocol), the Master Key Identifier (MKID) represents an identifier of the Pairwise Master Key (PMK), the I-Nonce represents a random number generated by the initiator with a random number generation function, and the Pairwise Temporal Key-Message Integrity Code (PTK-MIC) is 0, which indicates that the Pairwise Temporal Key-Message Integrity Code (PTK-MIC) is not calculated.

2) Upon reception of the message 1, the responder discards the message 1 if the condition that the Message Number (MN) is 1, the Status Code (SC) is 0 and the Pairwise Temporal Key-Message Integrity Code (PTK-MIC) is 0 is not satisfied; otherwise, the responder verifies whether the Master Key Identifier (MKID) is an identifier of a Pairwise Master Key (PMK) pre-shared between the initiator and the responder, and if not, the responder discards the message 1; otherwise, the responder verifies whether the Master Key Identifier (MKID) is used in an ongoing four-way handshake protocol, and if so, the responder discards the message 1 and sets the Status Code (SC) to 2 (which indicates that the Master Key Identifier (MKID) is used in the ongoing four-way handshake protocol) to notify the initiator of the status of the protocol; otherwise, the responder verifies the Pairwise Temporal Key Identifier (PTKID), and if the Pairwise Temporal Key Identifier (PTKID) is the same as the Temporal Key Identifier (TKID) locally stored or used in the ongoing four-way handshake protocol or Group Temporal Key (GTK) distribution protocol, the responder discards the message 1 and sets the Status Code (SC) to 3 (which indicates that the Pairwise Temporal Key Identifier (PTKID) is the same as the Temporal Key Identifier (TKID) locally stored or used in the ongoing four-way handshake protocol or Group Temporal Key (GTK) distribution protocol) to notify the initiator of the status of the protocol; otherwise, the responder generates a random number R-Nonce and calculates with an extension function a Pairwise Temporal Key (PTK) and a Key Confirmation Key (KCK) from the Pairwise Master Key (PMK), the I-Nonce, the R-Nonce, the MAC address I-MAC of the initiator and the MAC address R-MAC of the responder and then transmits to the initiator a message 2=MN||SC||PTKID|MKID||R-Nonce||PTK-MIC, where the Message Number (MN) is 2, the Status Code (SC) is 0, the Pairwise Temporal Key Identifier (PTKID) and the Master Key Identifier (MKID) are the same as the corresponding values in the message 1, and the Pairwise Temporal Key-Message Integrity Code (PTK-MIC) is a Message Integrity Code (MIC) calculated with a local Key Confirmation Key (KCK) from the message 2 (the other parameters than the Pairwise Temporal Key-Message Integrity Code (PTK-MIC)), the MAC address I-MAC of the initiator and the MAC address R-MAC of the responder.

3) Upon reception of the message 2, the initiator discards the message 2 if the condition that the Message Number (MN) is 2, the Status Code (SC) is 0, and the Pairwise Temporal Key Identifier (PTKID) and the Master Key Identifier (MKID) are the same as the corresponding values in the message 1 is not satisfied; otherwise, the initiator calculates with the extension function a Pairwise Temporal Key (PTK) and a Key Confirmation Key (KCK) from the Pairwise Mater Key (PMK), the I-Nonce, the R-Nonce, the MAC address I-MAC of the initiator and the MAC address R-MAC of the responder, and then recalculates with a local Key Confirmation Key (KCK) a Message Integrity Code (MIC) from the message 2 (the other parameters than the Pairwise Temporal Key-Message Integrity Code (PTK-MIC)), the MAC address I-MAC of the initiator and the MAC address R-MAC of the responder and compares the recalculated MIC with the Pairwise Temporal Key-Message Integrity Code (PTK-MIC) in the message 2, and if they are different, the initiator discards the message 2 and sets the Status Code (SC) to 1 (which indicates that the verification is not passed) to notify the responder of the status of the protocol; otherwise, the initiator transmits a message 3: MN∥SC∥PTKID|MKID∥I-Nonce∥PTK-MIC to the responder, where the Message Number (MN) is 3, the Status Code (SC) is 0, the Pairwise Temporal Key Identifier (PTKID) and the Master Key Identifier (MKID) are the same as the corresponding values in the message 2, and the Pairwise Temporal Key-Message Integrity Code (PTK-MIC) is a Message Integrity Code (MIC) calculated with the local Key Confirmation Key (KCK) from the message 3 (the other parameters than the Pairwise Temporal Key-Message Integrity Code (PTK-MIC)), the MAC address I-MAC of the initiator and the MAC address R-MAC of the responder.

4) Upon reception of the message 3, the responder discards the message 3 if the condition that the Message Number (MN) is 3, the Status Code (SC) is 0, and the Pairwise Temporal Key Identifier (PTKID) and the Master Key Identifier (MKID) are the same as the corresponding values in the message 2 is not satisfied; otherwise, the responder recalculates with the local Key Confirmation Key (KCK) a Message Integrity Code (MIC) from the message 3 (the other parameters than the Pairwise Temporal Key-Message Integrity Code (PTK-MIC)), the MAC address I-MAC of the initiator and the MAC address R-MAC of the responder and compares the recalculated MIC with the Pairwise Temporal Key-Message Integrity Code (PTK-MIC) in the message 3, and if they are different, the responder discards the message 3 and sets the Status Code (SC) to 1 (which indicates that the verification is not passed) to notify the initiator of the status of the protocol; otherwise, the responder transmits a message 4: MN∥SC∥PTKID|MKID∥R-Nonce∥PTK-MIC to the initiator, where the Message Number (MN) is 4, the Status Code (SC) is 0, the Pairwise Temporal Key Identifier (PTKID) and the Master Key Identifier (MKID) are the same as the corresponding values in the message 3, and the Pairwise Temporal Key-Message Integrity Code (PTK-MIC) is a Message Integrity Code (MIC) calculated with the local Key Confirmation Key (KCK) from the message 4 (the other parameters than the Pairwise Temporal Key-Message Integrity Code (PTK-MIC)), the MAC address I-MAC of the initiator and the MAC address R-MAC of the responder.

5) Upon reception of the message 4, the initiator discards the message 4 if the condition that the Message Number (MN) is 4, the Status Code (SC) is 0, and the Pairwise Temporal Key Identifier (PTKID) and the Master Key Identifier (MKID) are the same as the corresponding values in the message 3 is not satisfied; otherwise, the initiator recalculates with the local Key Confirmation Key (KCK) a Message Integrity Code (MIC) from the message 4 (the other parameters than the Pairwise Temporal Key-Message Integrity Code (PTK-MIC)), the MAC address I-MAC of the initiator and the MAC address R-MAC of the responder and compares the recalculated MIC with the Pairwise Temporal Key-Message Integrity Code (PTK-MIC) in the message 4, and if they are different, the initiator discards the message 4; otherwise, the initiator and the responder perform the four-way handshake protocol successfully and obtain the Pairwise Temporal Key (PTK) and the Key Confirmation Key (KCK) respectively.

The initiator and the responder use the Pairwise Temporal Key (PTK) to protect uni-cast service data between the initiator and the responder after performing the foregoing four-way handshake protocol.

As can be apparent from the foregoing four-way handshake protocol, each time the Pairwise Temporal Key (PTK) is to be updated, the initiator and the responder have to use the Pairwise Temporal Key (PTK) being used for encryption and interaction in the four-way handshake protocol, and the initiator has to recalculate and generate a new random number I-Nonce. However, devices in some applications of an Ultra Wideband (UWB) communication network, which are low-power and low-consumption (powered with a battery) ones with rather limited resources of power, communication, computation, etc., may suffer from the limited resources when the Pairwise Temporal Key (PTK) is updated.

WO2008/112455A2 discloses a method for establishing secure associations between two mesh points (MPs) within a communication network by using a shortened three-way handshake, where the communication network is an ad hoc wireless network. Specifically in this method, an MP that initiates the abbreviated Efficient Mesh Security Association (EMSA) handshake sends a peer link open message containing a Mesh Security Association information element (MSAIE), a Mesh Security Capability information element (MSCIE) and a robust security network information element (RSNIE), where the RSNIE contains a Pairwise Master Key identification (PMKID) list. The PMKID list contains one or two entries that identify the shared Mesh Authenticator Pairwise Master Key (PMK-MA) or Keys available to secure the peer link. The Peer Link Open message requests that a link be established between the Peer Link Open sender and the receiver. In the abbreviated EMSA handshake including the peer link setup message and peer link response message, the determination of roles depends on the information exchanged in the peer link open message(s). EMSA services are provided through the use of a mesh key hierarchy, a hierarchy of derived keys that is established through the use of a Pre-Shared Key (PSK) or when an MP performs IEEE 802.1X authentication using an extensible authentication protocol (EAP) authentication method. The Abbreviated EMSA handshake allows an MP to establish a pairwise transient key with a mesh authenticator, by utilizing the mesh key hierarchy it established during initial EMSA authentication.

### Summary of the Invention

In order to address the foregoing technical problem present in the prior art, the invention provides a three-way handshake protocol method applicable to an ultra wideband network for the purpose of saving more computation resources.

A technical solution of the invention is as follows.

A three-way handshake protocol method, including the following steps:
1) transmitting, by an initiator, to a responder a message 1 including a Pairwise Temporal Key Identifier, PTKID, a Master Key Identifier, MKID, an Update Identifier, UD, and a random number I-Nonce, wherein the PTKID represents a value selected randomly by the initiator and is different from a Temporal Key Identifier, TKID, locally stored or used in an ongoing three-way handshake protocol or Group Temporal Key, GTK, distribution protocol, the MKID represents an identifier of a Pairwise Master Key, PMK, the UD indicates a process of updating a Pairwise Temporal Key, PTK, or not, and the I-Nonce represents a random number generated by the initiator;
2) verifying, by the responder, the MKID and the PTKID upon reception of the message 1 and performing a step a1) after the MKID and the PTKID pass the verification;
   a1) verifying whether the UD indicates a process of updating the PTK, and if not, performing a step a2); otherwise, checking whether the I-Nonce is the same as a locally stored value of the I-Nonce negotiated by the initiator and the responder in a last successful process of negotiation about the PTK, and if not, discarding the message 1; otherwise, performing the step a2); and
   a2) generating a random number R-Nonce with a random number generation function, calculating with an extension function a PTK, a Key Confirmation Key, KCK, and a seed of the I-Nonce for a next process of negotiation about a PTK from the Pairwise Master Key, PMK, the I-Nonce, the R-Nonce, an MAC address I-MAC of the initiator and an MAC address R-MAC of the responder, and then calculating from the seed with the extension function and storing the I-Nonce for the next process of negotiation about a PTK and transmitting to the initiator a message 2 including the PTKID, the MKID, the UD, the R-Nonce and a Pairwise Temporal Key-Message Integrity Code, PTK-MIC, wherein the PTKID, the MKID and the UD are the same as the corresponding values in the message 1, and the PTK-MIC is a Message Integrity Code, MIC, calculated with the local KCK from the other parameters than the PTK-MIC in the message 2, the I-Nonce in the message 1, the MAC address I-MAC of the initiator and the MAC address R-MAC of the responder;
3) comparing, by the initiator, the corresponding parameters in the message 2 with those in the message 1 for consistency upon reception of the message 2, and if they are different, discarding the message 2; otherwise, calculating and storing the I-Nonce for the next process of negotiation about a PTK from the PMK, the I-Nonce, the R-Nonce, the MAC address I-MAC of the initiator and the MAC address R-MAC of the responder, and recalculating with the local KCK and MIC and comparing the recalculated MIC with the PTK-MIC in the message 2, and if they are different, discarding the message 2; otherwise, transmitting to the responder a message 3 including the PTKID, the MKID, the UD, the R-Nonce and a PTK-MIC; and
4) comparing, by the responder, the corresponding parameters in the message 3 with those in the message 2 for consistency upon reception of the message 3, and if they are different, discarding the message 3; otherwise, recalculating with the local KCK an MIC, and comparing the recalculated MIC with the PTK-MIC in the message 3, and if they are different, discarding the message 3; otherwise, terminating the three-way handshake protocol procedure.

In the step 1), at the first time of creating the PTK, the I-Nonce is generated by the initiator with the random number generation function, and at the time of updating the PTK, the I-Nonce is a value negotiated by the initiator and the responder in the last successful process of negotiation about the PTK.

After the step 4), the three-way handshake protocol method further includes the following steps:
5) transmitting, by the responder, to the initiator a message 4 including the PTKID, the MKID, the UD, the I-Nonce, and a PTK-MIC, wherein the PTKID, the MKID, the UD and the I-Nonce are the same as the corresponding values in the message 1, and the PTK-MIC is an MIC calculated with the local KCK from the other parameters than the PTK-MIC in the message 4, the MAC address I-MAC of the initiator and the MAC address R-MAC of the responder; and
6) performing, by the initiator, the following processes upon reception of the message 4:
   6.1) discarding the message 4 if the PTKID, the MKID, the UD and the I-Nonce are different from the corresponding values in the message 1; otherwise, performing an operation of 6.2); and
   6.2) recalculating with the local KCK an MIC from the other parameters than the PTK-MIC in the message 4, the MAC address I-MAC of the initiator and the MAC address R-MAC of the responder and comparing the recalculated MIC with the PTK-MIC in the message 4, and if they are different, discarding the message 4; otherwise, the initiator and the responder performs the four-way handshake protocol successfully and obtains the PTK, the KCK and the I-Nonce for their next updating of a PTK.

Verifying the MKID and the PTKID includes:
2.1) verifying whether the MKID is an identifier of the Pairwise Master Key, PMK, pre-shared between the initiator and the responder, if not, discarding the message 1; otherwise, performing a step 2.2);
2.2) verifying whether the MKID is used in an ongoing three-way handshake protocol, and if so, discarding the message 1; otherwise, performing a step 2.3); and
2.3) verifying the PTKID, and discarding the message 1 if the PTKID is the same as the TKID locally stored or used in the ongoing three-way handshake protocol or Group Temporal Key, GTK, distribution protocol; otherwise, performing the step a1).

Comparing the corresponding parameters in the message 2 with those in the message 1 for consistency includes:
comparing the PTKID, the MKID, the UD and the I-Nonce in the message 2 with the corresponding values in the message 1 for consistency.

Calculating and storing the I-Nonce for a next process of negotiation about a PTK from the PMK, the I-Nonce, the R-Nonce, the MAC address I-MAC of the initiator and the MAC address R-MAC of the responder includes:
calculating with the extension function a PTK, a KCK and a seed of the I-Nonce for a next process of negotiation about a PTK from the Pairwise Master Key, PMK, the I-Nonce, the R-Nonce, the MAC address I-MAC of the initiator and the MAC address R-MAC of the responder; and
calculating from the seed with the extension function and storing the I-Nonce for the next process of negotiation about a PTK.

Recalculating by the initiator an MIC with the local KCK includes:
recalculating with the local KCK an MIC from the other parameters than the PTK-MIC in the message 2, the I-Nonce in the message 1, the MAC address I-MAC of the initiator and the MAC address R-MAC of the responder.

The message 3 includes the PTKID, the MKID, the UD, the R-Nonce and a PTK-MIC, wherein the PTKID, the MKID, the UD and the random number R-Nonce are with the same as the corresponding values in the message 2, and the PTK-MIC is an MIC calculated with the local KCK from the other parameters than the PTK-MIC in the message 3, the MAC address I-MAC of the initiator and the MAC address R-MAC of the responder.

Comparing the corresponding parameters in the message 3 with those in the message 2 for consistency includes:
comparing the PTKID, the MKID, the UD and the random number R-Nonce in the message 3 with the corresponding values in the message 2 for consistency.

Recalculating by the responder an MIC with the local KCK includes:
recalculating with the local KCK an MIC from the other parameters than the PTK-MIC in the message 3, the MAC address I-MAC of the initiator and the MAC address R-MAC of the responder.

The invention provides a three-way handshake protocol method applicable to an ultra wideband network, where at the time of updating a Pairwise Temporal Key (PTK), the initiator constructs and transmits to the responder the message 1 directly from the I-Nonce generated and stored in a last process of negotiation about the Pairwise Temporal Key (PTK), and it is unnecessary to encrypt the messages exchanged in the three-way handshake protocol, thereby offering both a function of preventing against being replayed and an advantage in an application with limited resources as compared with the four-way handshake protocol of ECMA386.

### Detailed Description of the Embodiments

A specific method according to the invention is performed as follows.
1) An initiator transmits to a responder a message 1 including a PTKID, an MKID, a UD and an I-Nonce, where the Pairwise Temporal Key Identifier (PTKID) represents a value selected randomly by the initiator (different from a Temporal Key Identifier (TKID) locally stored or used in an ongoing three-way handshake protocol or Group Temporal Key (GTK) distribution protocol), the Master Key Identifier (MKID) represents an identifier of a Pairwise Master Key (PMK), the Update Identifier (UD) indicates a process of updating the Pairwise Temporal Key (PTK) or not, and the I-Nonce represents a random number generated by the initiator (at the first time of creating the Pairwise Temporal Key (PTK), the I-Nonce is generated by the initiator with a random number generation function, and at the time of updating the Pairwise Temporal Key (PTK), the I-Nonce is a value negotiated by the initiator and the responder in the last successful process of negotiation about the Pairwise Temporal Key (PTK)).
2) The responder performs the following processes upon reception of the message 1.
   2.1) The responder verifies whether the Master Key Identifier (MKID) is an identifier of a Pairwise Master Key (PMK) pre-shared between the initiator and the responder, and if not, the responder discards the message 1; otherwise, the responder performs the step 2.2).
   2.2) The responder verifies whether the Master Key Identifier (MKID) is used in an ongoing three-way handshake protocol, and if so, the responder discards the message 1; otherwise, the responder performs the step 2.3).
   2.3) The responder verifies the Pairwise Temporary Key Identifier (PTKID), and if the Pairwise Temporary Key Identifier (PTKID) is the same as the Temporal Key Identifier (TKID) locally stored or used in the ongoing three-way handshake protocol or Group Temporal Key (GTK) distribution protocol, the responder discards the message 1; otherwise, the responder performs the step 2.4).
   2.4) The responder verifies whether the Update Identifier (UD) indicates a process of updating the Pairwise Temporal Key (PTK), and if not, the responder performs the step 2.5); otherwise, the responder checks whether the I-Nonce is the same as a locally stored value of the I-Nonce negotiated by the initiator and the responder in the last successful process of negotiation about the Pairwise Temporal Key (PTK), and if not, the responder discards the message 1; otherwise, the responder performs the step 2.5).
   2.5) The responder generates a random number R-Nonce with the random number generation function, calculates with an extension function a Pairwise Temporal Key (PTK), a Key Confirmation Key (KCK) and a seed of the I-Nonce for a next process of negotiation about a Pairwise Temporal Key (PTK) from the Pairwise Master Key (PMK), the I-Nonce, the R-Nonce, the MAC address I-MAC of the initiator and the MAC address R-MAC of the responder, and then calculates from the seed with the extension function and stores the I-Nonce for the next process of negotiation about a Pairwise Temporal Key (PTK), and transmits to the initiator a message 2 including the PTKID, the MKID, the UD, the R-Nonce and a PTK-MIC, where the Pairwise Temporal Key Identifier (PTKID), the Master Key Identifier (MKID) and the Update Identifier (UD) are the same as the corresponding values in the message 1, and the Pairwise Temporal Key-Message Integrity Code (PTK-MIC) is a Message Integrity Code (MIC) calculated with a local Key Confirmation Key (KCK) from the message 2 (the other parameters than the Pairwise Temporal Key-Message Integrity Code (PTK-MIC)), the random number I-Nonce in the message 1, the MAC address I-MAC of the initiator and the MAC address R-MAC of the responder.
3) The initiator performs the following processes upon reception of the message 2.
   3.1) If the Pairwise Temporal Key Identifier (PTKID), the Master Key Identifier (MKID), the Update Identifier (UD) and the random number I-Nonce are not the same as the corresponding values in the message 1, the initiator discards the message 2; otherwise, the initiator performs the step 3.2).
   3.2) The initiator calculates with the extension function a Pairwise Temporal Key (PTK), a Key Confirmation Key (KCK) and a seed of the I-Nonce for a next process of negotiation about a Pairwise Temporal Key (PTK) from the Pairwise Master Key (PMK), the I-Nonce, the R-Nonce, the MAC address I-MAC of the initiator and the MAC address R-MAC of the responder, and then calculates from the seed with the extension function and stores the I-Nonce for the next process of negotiation about a Pairwise Temporal Key (PTK), recalculates with the local Key Confirmation Key (KCK) a Message Integrity Code (MIC) from the message 2 (the other parameters than the Pairwise Temporal Key-Message Integrity Code (PTK-MIC)), the random number I-Nonce in the message 1, the MAC address I-MAC of the initiator and the MAC address R-MAC of the responder and compares the recalculated MIC with the Pairwise Temporal Key-Message Integrity Code (PTK-MIC) in the message 2, and if they are different, the initiator discards the message 2; otherwise, the initiator transmits to the responder a message 3 including the PTKID, the MKID, the UD, the R-Nonce, and the PTK-MIC, where the Pairwise Temporal Key Identifier (PTKID), the Master Key Identifier (MKID), the Update Identifier (UD) and the random number R-Nonce are the same as the corresponding values in the message 2, and the Pairwise Temporal Key-Message Integrity Code (PTK-MIC) is a Message Integrity Code (MIC) calculated with the local Key Confirmation Key (KCK) from the message 3 (the other parameters than the Pairwise Temporal Key-Message Integrity Code (PTK-MIC)), the MAC address I-MAC of the initiator and the MAC address R-MAC of the responder.
4) The responder performs the following processes upon reception of the message 3.
   4.1) If the Pairwise Temporal Key Identifier (PTKID), the Master Key Identifier (MKID), the Update Identifier (UD) and the random number R-Nonce are not the same as the corresponding values in the message 2, the responder discards the message 3; otherwise, the responder performs the operation of 4.2).
   4.2) The responder recalculates with the local Key Confirmation Key (KCK) a Message Integrity Code (MIC) from the message 3 (the other parameters than the Pairwise Temporal Key-Message Integrity Code (PTK-MIC)), the MAC address I-MAC of the initiator and the MAC address R-MAC of the responder and compares the recalculated MIC with the Pairwise Temporal Key-Message Integrity Code (PTK-MIC) in the message 3, and if they are different, the responder discards the message 3; otherwise, the initiator and the responder perform the three-way handshake protocol successfully and obtain the Pairwise Temporal Key (PTK), the Key Confirmation Key (KCK) and the I-Nonce for their next updating of the Pairwise Temporal Key (PTK).

   The responder may further transmit a message 4 to the initiator upon reception of the message 3, that is, perform the following steps 5) and 6) following the step 4), so as to install the Pairwise Temporal Key (PTK) and notify the initiator of successful negotiation thereof
5) The responder transmits to the initiator a message 4 including the PTKID, the MKID, the UD, the I-Nonce and the PTK-MIC, where the Pairwise Temporal Key Identifier (PTKID), the Master Key Identifier (MKID), the Update Identifier (UD) and the random number I-Nonce are the same as the corresponding values in the message 1, and the Pairwise Temporal Key-Message Integrity Code (PTK-MIC) is a Message Integrity Code (MIC) calculated with the local Key Confirmation Key (KCK) from the message 4 (the other parameters than the Pairwise Temporal Key-Message Integrity Code (PTK-MIC)), the MAC address I-MAC of the initiator and the MAC address R-MAC of the responder.
6) The initiator performs the following processes upon reception of the message 4.
   6.1) If the Pairwise Temporal Key Identifier (PTKID), the Master Key Identifier (MKID), the Update Identifier (UD) and the random number I-Nonce are not the same as the corresponding values in the message 1, the initiator discards the message 4; otherwise, the initiator performs the operation of 6.2).
   6.2) The initiator recalculates with the local Key Confirmation Key (KCK) a Message Integrity Code (MIC) from the message 4 (the other parameters than the Pairwise Temporal Key-Message Integrity Code (PTK-MIC)), the MAC address I-MAC of the initiator and the MAC address R-MAC of the responder and compares the recalculated MIC with the Pairwise Temporal Key-Message Integrity Code (PTK-MIC) in the message 4, and if they arc different, the initiator discards the message 4; otherwise, the initiator and the responder perform the four-way handshake protocol successfully and obtain the Pairwise Temporal Key (PTK), the Key Confirmation Key (KCK) and the I-Nonce for their next updating of the Pairwise Temporal Key (PTK).

Although the invention has been described in connection with the embodiments, those ordinarily skilled in the art shall appreciate that numerous modifications and variations of the invention are possible without departing from the scope of the invention, and the appended claims are intended to encompass these modifications and variations without departing from the scope of the invention.

## Claims

1. A three-way handshake protocol method, comprising the following steps:
1) transmitting, by an initiator, to a responder a message 1 comprising a Pairwise Temporal Key Identifier, PTKID, a Master Key Identifier, MKID, an Update Identifier, UD, and a random number I-Nonce, wherein the PTKID represents a value selected randomly by the initiator and is different from a Temporal Key Identifier, TKID, locally stored or used in an ongoing three-way handshake protocol or Group Temporal Key, GTK, distribution protocol, the MKID represents an identifier of a Pairwise Master Key, PMK, the UD indicates a process of updating a Pairwise Temporal Key, PTK, or not, and the I-Nonce represents a random number generated by the initiator;
2) verifying, by the responder, the MKID and the PTKID upon reception of the message 1 and performing a step a1) after the MKID and the PTKID pass the verification;
a1) verifying whether the UD indicates a process of updating the PTK, and if not, performing a step a2); otherwise, checking whether the I-Nonce is the same as a locally stored value of the I-Nonce negotiated by the initiator and the responder in a last successful process of negotiation about the PTK, and if not, discarding the message 1; otherwise, performing the step a2); and
a2) generating a random number R-Nonce with a random number generation function, calculating with an extension function a PTK, a Key Confirmation Key, KCK, and a seed of the I-Nonce for a next process of negotiation about a PTK from the Pairwise Master Key, PMK, the I-Nonce, the R-Nonce, an MAC address I-MAC of the initiator and an MAC address R-MAC of the responder, and then calculating from the seed with the extension function and storing the I-Nonce for the next process of negotiation about a PTK and transmitting to the initiator a message 2 comprising the PTKID, the MKID, the UD, the R-Nonce and a Pairwise Temporal Key-Message Integrity Code, PTK-MIC, wherein the PTKID, the MKID and the UD are the same as the corresponding values in the message 1, and the PTK-MIC is a Message Integrity Code, MIC, calculated with the local KCK from the other parameters than the PTK-MIC in the message 2, the I-Nonce in the message 1, the MAC address I-MAC of the initiator and the MAC address R-MAC of the responder;
3) comparing, by the initiator, the corresponding parameters in the message 2 with those in the message 1 for consistency upon reception of the message 2, and if they are different, discarding the message 2; otherwise, calculating and storing the I-Nonce for the next process of negotiation about a PTK from the PMK, the I-Nonce, the R-Nonce, the MAC address I-MAC of the initiator and the MAC address R-MAC of the responder, and recalculating with the local KCK an MIC and comparing the recalculated MIC with the PTK-MIC in the message 2, and if they are different, discarding the message 2; otherwise, transmitting to the responder a message 3 comprising the PTKID, the MKID, the UD, the R-Nonce and a PTK-MIC; and
4) comparing, by the responder, the corresponding parameters in the message 3 with those in the message 2 for consistency upon reception of the message 3, and if they are different, discarding the message 3; otherwise, recalculating with the local KCK an MIC, and comparing the recalculated MIC with the PTK-MIC in the message 3, and if they are different, discarding the message 3; otherwise, terminating the three-way handshake protocol procedure.

2. The three-way handshake protocol method according to claim 1, wherein in the step 1), at the first time of creating the PTK, the I-Nonce is generated by the initiator with the random number generation function, and at the time of updating the PTK, the I-Nonce is a value negotiated by the initiator and the responder in the last successful process of negotiation about the PTK.

3. The three-way handshake protocol method according to claim 1, wherein after the step 4), the method further comprises the following steps:
5) transmitting, by the responder, to the initiator a message 4 comprising the PTKID, the MKID, the UD, the I-Nonce, and a PTK-MIC, wherein the PTKID, the MKID, the UD and the I-Nonce are the same as the corresponding values in the message 1, and the PTK-MIC is an MIC calculated with the local KCK from the other parameters than the PTK-MIC in the message 4, the MAC address I-MAC of the initiator and the MAC address R-MAC of the responder; and
6) performing, by the initiator, the following processes upon reception of the message 4:
6.1) discarding the message 4 if the PTKID, the MKID, the UD and the I-Nonce are different from the corresponding values in the message 1; otherwise, performing an operation of 6.2); and
6.2) recalculating with the local KCK an MIC from the other parameters than the PTK-MIC in the message 4, the MAC address I-MAC of the initiator and the MAC address R-MAC of the responder and comparing the recalculated MIC with the PTK-MIC in the message 4, and if they are different, discarding the message 4; otherwise, the initiator and the responder performs the four-way handshake protocol successfully and obtains the PTK, the KCK and the I-Nonce for their next updating of a PTK.

4. The three-way handshake protocol method according to any one of claims 1 to 3, wherein verifying the MKID and the PTKID comprises:
2.1) verifying whether the MKID is an identifier of the Pairwise Master Key, PMK, pre-shared between the initiator and the responder, if not, discarding the message 1; otherwise, performing a step 2.2);
2.2) verifying whether the MKID is used in an ongoing three-way handshake protocol, and if so, discarding the message 1; otherwise, performing a step 2.3); and
2.3) verifying the PTKID, and discarding the message 1 if the PTKID is the same as the TKID locally stored or used in the ongoing three-way handshake protocol or Group Temporal Key, GTK, distribution protocol; otherwise, performing the step a1).

5. The three-way handshake protocol method according to any one of claims 1 to 3, wherein comparing the corresponding parameters in the message 2 with those in the message 1 for consistency comprises:
comparing the PTKID, the MKID, the UD and the I-Nonce in the message 2 with the corresponding values in the message 1 for consistency.

6. The three-way handshake protocol method according to any one of claims 1 to 3, wherein calculating and storing the I-Nonce for a next process of negotiation about a PTK from the PMK, the I-Nonce, the R-Nonce, the MAC address I-MAC of the initiator and the MAC address R-MAC of the responder comprises:
calculating with the extension function a PTK, a KCK and a seed of the I-Nonce for a next process of negotiation about a PTK from the Pairwise Master Key, PMK, the I-Nonce, the R-Nonce, the MAC address I-MAC of the initiator and the MAC address R-MAC of the responder; and
calculating from the seed with the extension function and storing the I-Nonce for the next process of negotiation about a PTK.

7. The three-way handshake protocol method according to any one of claims 1 to 3, wherein recalculating by the initiator an MIC with the local KCK comprises:
recalculating with the local KCK an MIC from the other parameters than the PTK-MIC in the message 2, the I-Nonce in the message 1, the MAC address I-MAC of the initiator and the MAC address R-MAC of the responder.

8. The three-way handshake protocol method according to any one of claims 1 to 3, wherein the message 3 comprises the PTKID, the MKID, the UD, the R-Nonce and a PTK-MIC, wherein the PTKID, the MKID, the UD and the random number R-Nonce are the same as the corresponding values in the message 2, and the PTK-MIC is an MIC calculated with the local KCK from the other parameters than the PTK-MIC in the message 3, the MAC address I-MAC of the initiator and the MAC address R-MAC of the responder.

9. The three-way handshake protocol method according to any one of claims 1 to 3, wherein comparing the corresponding parameters in the message 3 with those in the message 2 for consistency comprises:
comparing the PTKID, the MKID, the UD and the random number R-Nonce in the message 3 with the corresponding values in the message 2 for consistency.

10. The three-way handshake protocol method according to any one of claims 1 to 3, wherein recalculating by the responder an MIC with the local KCK comprises:
recalculating with the local KCK an MIC from the other parameters than the PTK-MIC in the message 3, the MAC address I-MAC of the initiator and the MAC address R-MAC of the responder.

## Patentansprüche

1. Drei-Wege-Handshake-Protokollverfahren, umfassend die folgenden Schritte:
1) durch einen Initiator an einen Responder erfolgendes Übertragen einer Nachricht 1 mit einer Pairwise Temporal Key-Kennung, PTKID, einer Master Key-Kennung, MKID, einer Update-Kennung, UD, und einem Zufallszahl-I-Nonce, wobei die PTKID einen Wert darstellt, der durch den Initiator nach dem Zufallsprinzip ausgewählt ist und sich von einer Temporal Key Kennung, TKID, unterscheidet, die lokal gespeichert ist oder in einem laufenden Drei-Wege-Handshake-Protokoll oder Group Temporal Key- bzw. GTK-Verteilungsprotokoll verwendet wird, die MKID eine Kennung eines Pairwise Master Key, PMK, darstellt, die UD einen Prozess der Aktualisierung eines Pairwise Temporal Key, PTK, anzeigt oder nicht, und der I-Nonce eine durch den Initiator generierte Zufallszahl darstellt;
2) Überprüfen der MKID und der PTKID durch den Responder bei Empfang der Nachricht 1 und Durchführen eines Schritts a1), nachdem die MKID und die PTKID die Überprüfung bestanden haben;
a1) Überprüfen, ob die UD einen Aktualisierungsprozess des PTK anzeigt, und wenn nicht, Durchführen eines Schritts a2); andernfalls Prüfen, ob der I-Nonce der gleiche ist wie ein lokal gespeicherter Wert des I-Nonce, der durch den Initiator und den Responder in einem letzten erfolgreichen Verhandlungsprozess über den PTK ausgehandelt worden ist, und wenn nicht, Verwerfen der Nachricht 1; andernfalls Durchführen des Schritts a2); und
a2) Generieren eines Zufallszahl-R-Nonce mit einer Zufallszahlgenerierungsfunktion, mit einer Erweiterungsfunktion erfolgendes Berechnen eines PTK, eines Key Confirmation Key, KCK, und eines Startwertes des I-Nonce für einen nächsten Verhandlungsprozess über einen PTK aus dem Pairwise Master Key, PMK, dem I-Nonce, dem R-Nonce, einer MAC-Adresse I-MAC des Initiators und einer MAC-Adresse R-MAC des Responders und anschließendes Berechnen aus dem Startwert mit der Erweiterungsfunktion und Speichern des I-Nonce für den nächsten Verhandlungprozess über einen PTK und an den Initiator erfolgendes Übertragen einer Nachricht 2 mit der PTKID, der MKID, der UD, dem R-Nonce und einem Pairwise Temporal Key-Message Integrity Code, PTK-MIC, wobei die PTKID, die MKID und die UD die gleichen sind wie die entsprechenden Werte in der Nachricht 1 und der PTK-MIC ein Message Integrity Code, MIC, ist, der mit dem lokalen KCK aus den anderen Parametern als dem PTK-MIC in der Nachricht 2, dem I-Nonce in der Nachricht 1, der MAC-Adresse I-MAC des Initiators und der MAC-Adresse R-MAC des Responders berechnet ist;
3) durch den Initiator erfolgendes Vergleichen der entsprechenden Parameter in der Nachricht 2 mit denen in der Nachricht 1 auf Übereinstimmung nach Empfang der Nachricht 2, und wenn sie unterschiedlich sind, Verwerfen der Nachricht 2; andernfalls Berechnen und Speichern des I-Nonce für den nächsten Verhandlungsprozess über einen PTK aus dem PMK, dem I-Nonce, dem R-Nonce, der MAC-Adresse I-MAC des Initiators und der MAC-Adresse R-MAC des Responders und erneutes Berechnen eines MIC mit dem lokalen KCK und Vergleichen des neu berechneten MIC mit dem PTK-MIC in der Nachricht 2, und wenn sie unterschiedlich sind, Verwerfen der Nachricht 2; andernfalls Übertragen einer Nachricht 3 mit der PTKID, der MKID, der UD, dem R-Nonce und dem PTK-MIC an den Responder; und
4) durch den Responder erfolgendes Vergleichen der entsprechenden Parameter in der Nachricht 3 mit denen in der Nachricht 2 auf Übereinstimmung bei Empfang der Nachricht 3, und wenn sie unterschiedlich sind, Verwerfen der Nachricht 3; andernfalls erneutes Berechnen eines MIC mit dem lokalen KCK und Vergleichen des neu berechneten MIC mit dem PTK-MIC in der Nachricht 3, und wenn sie unterschiedlich sind, Verwerfen der Nachricht 3; andernfalls Beenden der Drei-Wege-Handshake-Protokollprozedur.

2. Drei-Wege-Handshake-Protokollverfahren nach Anspruch 1, wobei im Schritt 1) beim erstmaligen Erzeugen des PTK der I-Nonce durch den Initiator mit der Zufallszahlgenerierungsfunktion generiert wird und zur Zeit der Aktualisierung des PTK der I-Nonce ein Wert ist, der durch den Initiator und den Responder im letzten erfolgreichen Verhandlungsprozess über den PTK ausgehandelt worden ist.

3. Dreiwege-Handshake-Protokollverfahren nach Anspruch 1, wobei nach dem Schritt 4) das Verfahren ferner die folgenden Schritte umfasst:
5) durch den Responder an den Initiator erfolgendes Übertragen einer Nachricht 4 mit der PTKID, der MKID, der UD, dem I-Nonce und einem PTK-MIC, wobei die PTKID, die MKID, die UD und der I-Nonce die gleichen sind wie die entsprechenden Werte in der Nachricht 1 und der PTK-MIC ein MIC ist, der mit dem lokalen KCK aus den anderen Parametern als dem PTK-MIC in der Nachricht 4, der MAC-Adresse I-MAC des Initiators und der MAC-Adresse R-MAC des Responders berechnet ist; und
6) Durchführen der folgenden Prozesse durch den Initiator nach Empfang der Nachricht 4:
6.1) Verwerfen der Nachricht 4, wenn die PTKID, die MKID, die UD und der I-Nonce sich von den entsprechenden Werten in der Nachricht 1 unterscheiden; andernfalls Durchführen einer Operation unter 6.2); und
6.2) erneutes Berechnen eines MIC mit dem lokalen KCK aus den anderen Parametern als dem PTK-MIC in der Nachricht 4, der MAC-Adresse I-MAC des Initiators und der MAC-Adresse R-MAC des Responders und Vergleichen des neu berechneten MIC mit dem PTK-MIC in der Nachricht 4, und wenn sie unterschiedlich sind, Verwerfen der Nachricht 4; andernfalls führen der Initiator und der Responder das Vier-Wege-Handshake-Protokoll erfolgreich durch und ermitteln den PTK, den KCK und den I-Nonce für ihre nächste Aktualisierung eines PTK.

4. Drei-Wege-Handshake-Protokollverfahren nach einem der Ansprüche 1 bis 3, wobei das Überprüfen der MKID und der PTKID umfasst:
2.1) Überprüfen, ob die MKID eine Kennung des Pairwise Master Key, PMK, ist, der durch den Initiator und den Responder vorab gemeinsam genutzt wird, wenn nicht, Verwerfen der Nachricht 1; andernfalls Durchführen eines Schritts 2.2);
2.2) Überprüfen, ob die MKID in einem laufenden Drei-Wege-Handshake-Protokoll verwendet wird, und wenn ja, Verwerfen der Nachricht 1; andernfalls Durchführen eines Schritts 2.3); und
2.3) Überprüfen der PTKID und Verwerfen der Nachricht 1, wenn die PTKID die gleiche ist wie die TKlD, die lokal gespeichert ist oder in dem laufenden Drei-Wege-Handshake-Protokoll oder dem Group Temporal Key- bzw. GTK-Verteilungsprotokoll verwendet wird; andernfalls Durchführen des Schritts a1).

5. Drei-Wege-Handshake-Protokollverfahren nach einem der Ansprüche 1 bis 3, wobei das Vergleichen der entsprechenden Parameter in der Nachricht 2 mit denen in der Nachricht 1 auf Übereinstimmung umfasst:
Vergleichen der PTKID, der MKID, der UD und des I-Nonce in der Nachricht 2 mit den entsprechenden Werten in der Nachricht 1 auf Übereinstimmung.

6. Dreiwege-Handshake-Protokollverfahren nach einem der Ansprüche 1 bis 3, wobei das Berechnen und Speichern des I-Nonce für einen nächsten Verhandlungsprozess über einen PTK aus der PMK, dem I-Nonce, dem R-Nonce, der MAC-Adresse I-MAC des Initiators und der MAC-Adresse R-MAC des Responders umfasst:
mit der Erweiterungsfunktion erfolgendes Berechnen eines KCK, eines PTK und eines Startwertes des I-Nonce für einen nächsten Verhandlungsprozess über einen PTK aus dem Pairwise Master Key, PMK, dem I-Nonce, dem R-Nonce, der MAC-Adresse I-MAC des Initiators und der MAC-Adresse R-MAC des Responders; und
Berechnen aus dem Startwert mit der Erweiterungsfunktion und Speichern des I-Nonce für den nächsten Verhandlungsprozess über einen PTK.

7. Drei-Wege-Handshake-Protokollverfahren nach einem der Ansprüche 1 bis 3, wobei das erneute Berechnen eines MIC durch den Initiator mit dem lokalen KCK umfasst:
erneutes Berechnen eines MIC mit dem lokalen KCK aus den anderen Parametern als dem PTK-MIC in der Nachricht 2, dem I-Nonce in der Nachricht 1, der MAC-Adresse I-MAC des Initiators und der MAC-Adresse R-MAC des Responders.

8. Drei-Wege-Handshake-Protokollerfahren nach einem der Ansprüche I bis 3, wobei die Nachricht 3 die PTKID, die MKID, die UD, den R-Nonce und einen PTK-MIC umfasst, wobei die PTKID, die MKID, die UD und der Zufallszahl-R-Nonce die gleichen sind wie die entsprechenden Werte in der Nachricht 2 und der PTK-MIC ein MIC ist, der mit dem lokalen KCK aus den anderen Parametern als dem PTK-MIC in der Nachricht 3, der MAC-Adresse I-MAC des Initiators und der MAC-Adresse R-MAC des Responders berechnet ist.

9. Drei-Wege-Handshake-Protokollverfahren nach einem der Ansprüche 1 bis 3, wobei das Vergleichen der entsprechenden Parameter in der Nachricht 3 mit denen in der Nachricht 2 auf Übereinstimmung umfasst:
Vergleichen der PTKID, der MKID, der UD und des Zufallszahl-R-Nonce in der Nachricht 3 mit den entsprechenden Werten in der Nachricht 2 auf Übereinstimmung.

10. Drei-Wege-Handshake-Protokollverfahren nach einem der Ansprüche 1 bis 3, wobei das erneute Berechnen eines MIC mit dem lokalen KCK durch den Responder umfasst:
Erneutes Berechnen eines MIC mit dem lokalen KCK aus den anderen Parametern als dem PTK-MIC in der Nachricht 3, der MAC-Adresse I-MAC des Initiators und der MAC-Adresse R-MAC des Responders.

## Revendications

1. Procédé de protocole d'établissement de connexion en trois étapes, comprenant les étapes suivantes :
1) transmettre, par un initiateur, à un répondeur, un message 1 comprenant un identifiant de clé temporelle par paire, PTKID, un identifiant de clé maîtresse, MKID, un identifiant de mise à jour, UD, et un nombre aléatoire I-Nonce, où le PTKID représente une valeur sélectionnée au hasard par l'initiateur et est différent d'un identifiant de clé temporelle, TKID, stocké localement ou utilisé dans un protocole d'établissement de connexion en trois étapes ou un protocole de distribution de clé temporelle de groupe, GTK, le MKID représente un identifiant de clé maîtresse par paire, PMK, l'UD indique un processus de mise à jour d'une clé temporelle par paire, PTK, ou non, et le I-Nonce représente un nombre aléatoire généré par l'initiateur ;
2) vérifier, par le répondeur, le MKID et le PTKID lors de la réception du message 1 et exécuter une étape a1) après que le MKID et le PTKID ont passé avec succès la vérification ;
a1) vérifier si l'UD indique un processus de mise à jour de la PTK et, sinon, exécuter une étape a2) ; sinon, vérifier si le I-Nonce est identique à une valeur du I-Nonce stockée localement négociée par l'initiateur et le répondeur dans un dernier processus réussi de négociation relatif à la PTK et, sinon, rejeter le message 1 ; sinon, exécuter l'étape a2) ; et
a2) générer un nombre aléatoire R-Nonce avec une fonction de génération de nombres aléatoires, calculer avec une fonction d'extension une PTK, une clé de confirmation de clé, KCK, et une amorce du nombre I-Nonce pour un prochain processus de négociation relatif à une PTK à partir de la clé principale par paire, PMK, du I-Nonce, du R-Nonce, d'une adresse MAC I-MAC de l'initiateur et d'une adresse MAC R-MAC du répondeur, puis calculer à partir de l'amorce avec la fonction d'extension et stocker le nombre I-Nonce pour le prochain processus de négociation relatif à une PTK et transmettre à l'initiateur un message 2 comprenant le PTKID, le MKID, l'UD, le R-Nonce et un code d'intégrité de message de clé temporelle par paire, PTK-MIC, où le PTKID, le MKID et l'UD sont les mêmes que les valeurs correspondantes dans le message 1, et le PTK-MIC est un code d'intégrité de message, MIC, calculé avec la KCK locale à partir des paramètres autres que le PTK-MIC dans le message 2, le nombre I-Nonce dans le message 1, l'adresse MAC I-MAC de l'initiateur et l'adresse MAC R-MAC du répondeur ;
3) comparer, quant à leur cohérence, par l'initiateur, les paramètres correspondants dans le message 2 avec ceux dans le message 1, lors de la réception du message 2, et s'ils sont différents, écarter le message 2 ; sinon, calculer et stocker le nombre I-Nonce pour le processus suivant de négociation relatif à une PTK à partir de la PMK, du nombre I-Nonce, du R-Nonce, de l'adresse MAC I-MAC de l'initiateur et de l'adresse MAC R-MAC du répondeur, et recalculer un MIC avec la KCK locale et comparer le MIC recalculé au PTK-MIC dans le message 2, et s'ils sont différents, écarter le message 2 ; sinon, transmettre au répondeur un message 3 comprenant le PTKID, le MKID, l'UD, le R-Nonce et un PTK-MIC ; et
4) comparer, quant à leur cohérence, par le répondeur, les paramètres correspondants dans le message 3 avec ceux dans le message 2, lors de la réception du message 3, et s'ils sont différents, écarter le message 3 ; sinon, recalculer un MIC avec la KCK locale et comparer le MIC recalculé avec le PTK-MIC dans le message 3 et, s'ils sont différents, écarter le message 3 ; sinon, mettre fin à la procédure de protocole d'établissement de connexion en trois étapes.

2. Procédé de protocole d'établissement de connexion en trois étapes selon la revendication 1, dans lequel, dans l'étape 1), au premier temps de la création de la PTK, le I-Nonce est généré par l'initiateur avec la fonction de génération de nombre aléatoire, et au temps de la mise à jour de la PTK, le nombre I-Nonce est une valeur négociée par l'initiateur et le répondeur dans le dernier processus réussi de négociation relatif à la PTK.

3. Procédé de protocole d'établissement de connexion en trois étapes selon la revendication 1, dans lequel, après l'étape 4), le procédé comprend en outre les étapes suivantes :
5) transmettre, par le répondeur, à l'initiateur, un message 4 comprenant le PTKID, le MKID, l'UD, l'I-Nonce et un PTK-MIC, où le PTKID, le MKID, l'UD et l'I-Nonce sont les mêmes que les valeurs correspondantes dans le message 1, et le PTK-MIC est un MIC calculé avec la KCK locale des paramètres autres que le PTK-MIC dans le message 4, l'adresse MAC I-MAC de l'initiateur et l'adresse MAC R-MAC du répondeur ; et
6) exécuter, par l'initiateur, les processus suivants lors de la réception du message 4 :
6.1) écarter le message 4 si le PTKID, le MKID, l'UD et l'I-Nonce sont différents des valeurs correspondantes dans le message 1 ; sinon, exécuter une opération de 6.2) ; et
6.2) recalculer avec un MIC avec la KCK locale à partir des paramètres autres que le PTK-MIC dans le message 4, l'adresse MAC I-MAC de l'initiateur et l'adresse MAC R-MAC du répondeur, et comparer le MIC recalculé avec le PTK-MIC dans le message 4, et s'ils sont différents, écarter le message 4 ; sinon, l'initiateur et le répondeur exécutent avec succès le protocole d'établissement de connexion en quatre étapes et obtiennent la PTK, la KCK et l'I-Nonce pour leur prochaine mise à jour d'une PTK.

4. Procédé de protocole d'établissement de connexion en trois étapes selon l'une quelconque des revendications 1 à 3, dans lequel la vérification du MKID et du PTKID comprend les étapes suivantes :
2.1) vérifier si le MKID est un identifiant de la clé maîtresse par paire, PMK, pré-partagée entre l'initiateur et le répondeur ; si tel n'est pas le cas, écarter le message 1 ; sinon, exécuter une étape 2.2) ;
2.2) vérifier si le MKID est utilisé dans un protocole d'établissement de connexion en trois étapes en cours et, si tel est le cas, écarter le message 1 ; sinon, exécuter une étape 2.3) ; et
2.3) vérifier la PTKID, et écarter le message 1 si le PTKID est le même que le TKID stocké localement ou utilisé dans le protocole d'établissement de connexion en trois étapes en cours ou le protocole de distribution de clé temporelle de groupe, GTK ; sinon, exécuter l'étape a1).

5. Procédé de protocole d'établissement de connexion en trois étapes selon l'une quelconque des revendications 1 à 3, dans lequel comparer, quant à leur cohérence, les paramètres correspondants dans le message 2 avec ceux dans le message 1 comprend les étapes suivantes :
comparer, quant à leur cohérence, le PTKID, le MKID, l'UD et l'I-Nonce dans le message 2 avec les valeurs correspondantes dans le message 1.

6. Procédé de protocole d'établissement de connexion en trois étapes selon l'une quelconque des revendications 1 à 3, dans lequel calculer et stocker l'I-Nonce pour un prochain processus de négociation relatif à une PTK à partir de la PMK, de l'I-Nonce, du R-nonce, de l'adresse MAC I-MAC de l'initiateur et de l'adresse MAC R-MAC du répondeur comprend les étapes suivantes :
calculer avec la fonction d'extension une PTK, une KCK et une amorce de l'I-Nonce pour un prochain processus de négociation relatif à une PTK à partir de la clé maîtresse par paire, PMK, de l'I-Nonce, lu R-Nonce, de l'adresse MAC I-MAC de l'initiateur et de l'adresse MAC R-MAC du répondeur ; et
calculer à partir de l'amorce avec la fonction d'extension et stocker l'I-Nonce pour le prochain processus de négociation relatif à une PTK.

7. Procédé de protocole d'établissement de connexion en trois étapes selon l'une quelconque des revendications 1 à 3, dans lequel recalculer par l'initiateur un MIC avec la KCK locale comprend l'étape suivante :
recalculer, avec la KCK locale, un MIC à partir des paramètres autres que le PTK-MIC dans le message 2, l'I-Nonce dans le message 1, l'adresse MAC I-MAC de l'initiateur et l'adresse MAC R-MAC du répondeur.

8. Procédé de protocole d'établissement de connexion en trois étapes selon l'une quelconque des revendications 1 à 3, dans lequel le message 3 comprend le PTKID, le MKID, l'UD, le R-Nonce et un PTK-MIC, où le PTKID, le MKID, l'UD et le nombre aléatoire R-Nonce sont les mêmes que les valeurs correspondantes dans le message 2, et le PTK-MIC est un MIC calculé avec la KCK locale des paramètres autres que le PTK-MIC dans le message 3, l'adresse MAC I-MAC de l'initiateur et l'adresse MAC R-MAC du répondeur.

9. Procédé de protocole d'établissement de connexion en trois étapes selon l'une quelconque des revendications 1 à 3, dans lequel comparer, quant à leur cohérence, les paramètres correspondants dans le message 3 avec ceux dans le message 2 comprend l'étape suivante :
comparer, quant à leur cohérence, le PTKID, le MKID, l'UD et le nombre aléatoire R-Nonce dans le message 3 avec les valeurs correspondantes dans le message 2.

10. Procédé de protocole d'établissement de connexion en trois étapes selon l'une quelconque des revendications 1 à 3, dans lequel recalculer, par le répondeur, un MIC avec la KCK locale comprend l'étape suivante :
recalculer un MIC avec la KCK locale à partir des paramètres autres que le PTK-MIC dans le message 3, l'adresse MAC I-MAC de l'initiateur et l'adresse MAC R-MAC du répondeur.
